# EUROPÄISCHE PATENTSCHRIFT

(11) **EP 3 063 100 B1**
(45) Veröffentlichungstag und Bekanntmachung des Hinweises auf die Patenterteilung: **20.03.2019**
(21) Anmeldenummer: 14792758.6
(22) Anmeldetag: 14.10.2014
(51) Int. Cl.: C04B 28/00, C04B 103/40, C04B 111/28, C04B 111/52

(54) **GEOPOLYMERSCHAUM-FORMULIERUNG**
GEOPOLYMER FOAM FORMULATION
FORMULATION DE MOUSSE GÉOPOLYMÈRE

(30) Priorität: 31.10.2013 EP 13190998
(43) Veröffentlichungstag der Anmeldung: 07.09.2016
(60) Teilanmeldung: 18214029.3
(73) Patentinhaber: Construction Research & Technology GmbH, 83308 Trostberg (DE)
(72) Erfinder: TURCINSKAS, Sarunas, 83308 Trostberg (DE); MÖNNIG, Sven, 71686 Remseck (DE); PULKIN, Maxim, 83022 Rosenheim (DE); HERTH, Gregor, 83308 Trostberg (DE); ZHOU, Shengzhong, 201100 Shangai (CN)
(74) Vertreter: BASF IP Association
(86) Internationale Anmeldenummer: PCT/EP2014/072027
(87) Internationale Veröffentlichungsnummer: WO 2015/062860

(56) Entgegenhaltungen:
- WO-A1-92/10440
- WO-A1-2008/026006
- WO-A2-2012/069024
- WO-A2-2013/148843
- DE-A1-102004 006 563
- US-A- 5 244 726
- J. Stark ET AL: "2.5.2.4 Silicastaub" In: "Zement und Kalk : der Baustoff als Werkstoff", 31 December 2000 (2000-12-31), BIRKHAÜSER VERLAG, BASEL, XP055415229, ISBN: 978-3-7643-6216-4 pages 72-73,
- J. Davidovits: "11.3.1 Silica fume / Microsilica" In: "Geopolymer", 31 July 2011 (2011-07-31), Institu Géopolymère, Saint-Quentin, XP055415241, ISBN: 978-2-9514820-5-0 pages 267-269,
- P Duxon: "3.2 Metallurgical slags" In: "Geopolymers", 31 December 2009 (2009-12-31), Woodhead Pub. Ltd., XP055415225, ISBN: 978-1-84569-449-4 page 38,
- J. Davidovits: "9.5 MK-750" In: "Geopolymer", 31 July 2011 (2011-07-31), Institu Géopolymère, Saint-Quentin, XP055415239, ISBN: 978-2-9514820-5-0 pages 216-217,

## Beschreibung

Die vorliegende Erfindung betrifft eine Geopolymerschaum-Formulierung, ein Verfahren zur Herstellung dieser Geopolymerschaum-Formulierung, die Verwendung dieser Formulierung zur Herstellung eines nicht brennbaren, schallabsorbierenden, wärmedämmenden Geopolymerschaumelements sowie das besagte Geopolymerschaumelement selbst.

Die akustischen Verhältnisse in Räumen hängen stark von den architektonischen Gegebenheiten ab. Dabei lassen sich die Größen, die den akustischen Eindruck eines Raumes bestimmen, durch entsprechende Raumgestaltung mehr oder weniger stark beeinflussen. Neben der reinen Lärmreduzierung ist die Anpassung der akustischen Eigenschaften eines Raumes an seinen Bestimmungszweck ein wesentliches Ziel der Raumakustik. Im Gegensatz zur Außenwelt sind die Schallfelder in Räumen diffus, da sie sich aus direktem und reflektiertem Schall generieren. Ihre Regelung kann durch entsprechende Reduzierung der Schallleistung erfolgen. Hierbei kommen technische Schallabsorber zum Einsatz, welche gezielte Absorptions- und Reflexionsvorgänge ermöglichen.

Grundsätzlich lassen sich technische Absorber, abhängig von ihrer Arbeitsweise in zwei Gruppen, nämlich in Resonatoren und poröse Absorber einteilen. Bei der Wirkungsweise von Resonatoren handelt es sich ganz allgemein um akustische FederMasse-Systeme, welche ein ausgeprägtes Schallabsorptionsmaximum besitzen. Beispiele für solche Schallabsorber sind Platten-Resonatoren, Helmholtz-Resonatoren oder mikroperforierte Absorber.

Im Gegensatz dazu erfolgt die Absorption der Schallenergie an porösen Absorbern in erster Linie durch Reibung an den Porenwänden, wo sie in Wärmeenergie umgewandelt wird. Hierfür ist eine offenporige Struktur mit ausreichender Porosität erforderlich. Aufgrund der primär durch Dissipation erzeugten Schallabsorption besitzen poröse Schallabsorber im Vergleich zu Resonatoren ein signifikant anderes Schallabsorptionsspektrum. Dabei steigt der frequenzabhängige Schallabsorptionsgrad im Idealfall stetig zu höheren Frequenzen s-förmig an und nähert sich asymptotisch einem Maximalwert. Poröse Absorber können unterschiedlich aufgebaut sein. Dabei sind die Materialvarianten sehr vielfältig.

Schaumprodukte sind im Allgemeinen Zweiphasensysteme, wobei eine Phase gasförmig und die andere fest oder flüssige ist. Dabei besteht die gasförmige Phase aus feinen Gasblasen, die durch feste oder flüssige Zellstege begrenzt werden. Die Zellstege sind über Knotenpunkte miteinander verbunden und bilden dabei ein Gerüst.

Schäume mit schallabsorbierenden Eigenschaften sind zumeist offenzellig. Hier sind die dünnen Wände zwischen den Begrenzungsstegen zumindest teilweise zerstört und die Zellen miteinander verbunden. Dadurch wirkt das Material als poröser Absorber. Die stoffliche Charakteristik der Zellstege in offenzelligen Schäumen ist sehr vielfältig. Sie reicht von Metallen über anorganische Materialien bis hin zu Organopolymeren, die im technischen Einsatz heutzutage den weitaus größten Anteil einnehmen und allgemein als Schaumstoffe bezeichnet werden. Organopolymerschäume werden, abhängig von ihrer Härte in Weich- und Hartschäume eingeteilt. Bei diesen erfolgt die Blasenbildung zumeist über ein Treibgas, welches in situ durch eine chemische Reaktion entsteht oder durch eine chemische Verbindung, die in der organischen Matrix gelöst ist und bei niedrigen Temperaturen siedet oder in gasförmige Produkte zerfällt. Daneben lassen sich Schäume auch durch mechanisches Einmischen von Gasen, durch Polymerisation in Lösung unter Phasentrennung oder durch den Einsatz von Füllstoffen, die nach der Härtung herausgelöst werden, erzeugen.

Offenzellige PUR-Schäume sind in der Literatur vielfach beschrieben. Sie werden üblicherweise aus isocayanathaltigen Verbindungen und Polyolen hergestellt. Zur Schaumbildung finden überwiegend Treibgase Verwendung, die durch ihren niederen Siedepunkt physikalisch wirksam sind. Auch gezielte Treibgas-Kombinationen aus physikalisch wirksamen Treibgasen und Kohlendioxid, welches durch chemische Reaktion der Isocyanatgruppen mit Wasser beim Verschäumen entsteht, sind gut bekannt. Bei einer Reaktion von Wasser und Isocyanaten entstehen im Gegensatz zur Reaktion mit Polyolen neben Kohlendioxid Harnstoffgruppen, die zur Bildung des Zellgerüstes beitragen. Eine weitere Alternative sind Melaminschäume.

Ein entscheidender Nachteil der Organopolymerschäume liegt in ihrer Brennbarkeit bzw. anders ausgedrückt in ihrer beschränkten Temperaturstabilität. Selbst als "schwer entflammbar" eingestufte Organopolymerschäume können beim Brennen giftige Gase freisetzen und tropfen. Daneben können sie, je nach ihrer Herstellung und Materialzusammensetzung, in Innenräumen schädliche Ausdünstungen wie z.B. Formaldehyd freisetzen. Es bestand daher ein Bedürfnis an nicht brennbaren anorganischen Schäumen.

In der DE 102004006563 A1 wird ein Verfahren zur Herstellung eines anorganisch-organischen Hybridschaumes mit folgenden Schritten beschrieben: a) Vermischen mindestens einer anorganischen, steinbildenden Reaktivkomponente, mindestens eines wasserhaltigen Härters, der eine Härtungsreaktion der mindestens einen anorganischen, steinbildenden Reaktivkomponenten im alkalischen Bereich bewirkt, mindestens eines Schäumungsmittels, mindestens einer organischen Siliciumverbindung und mindestens eines Tensids sowie b) wenigstens teilweises Aushärten der Mischung. Allerdings wird hier kein rein anorganischer Schaum gebildet.

In der DE 4301749 A1 wird ein Schalldämpfer zur Durchleitung von Abgasen aus Verbrennungsmotoren mit zumindest einem schallabsorbierenden Körper aus einem porösen Material beschrieben. Um bei einfacher Herstellung eine möglichst wirksame Schalldämpfung zu erreichen, wird vorgeschlagen, dass das Material auf Basis eines Geopolymers gebildet ist. Allerdings wird hier die Materialzusammensetzung des Geopolymers nicht näher erläutert.

WO 2011/106815 A1 beschreibt eine Formulierung zur Herstellung eines Brandschutz-Mineralschaums, umfassend oder bestehend aus einem Wasserglas, zumindest einem Aluminiumsilikat, zumindest einem Hydroxid sowie zumindest einer oxidischen Komponente aus einer Gruppe umfassend SiO₂ und Al₂O₃, dadurch gekennzeichnet, dass das Wasserglas in einem Anteil ausgewählt aus einem Bereich von 10 Gewichtsteilen und 50 Gewichtsteilen enthalten ist, das Aluminiumsilikat in einem Anteil enthalten ist, dass der Al₂O₃ - Anteil zwischen 8 Gewichtsteilen und 55 Gewichtsteilen beträgt, das Hydroxid in einem Anteil enthalten ist, dass der OH- Anteil zwischen 0,5 Gewichtsteilen und 4 Gewichtsteilen beträgt und die oxidische Komponente in Anteil zwischen 5 Gewichtsteilen und 55 Gewichtsteilen enthalten ist, sowie den Mineralschaum und ein Verfahren zum Herstellen des Mineralschaums.

Als Aluminiumsilikat wird dort bevorzugt ein alkalisch aktivierbares Aluminiumsilikat, insbesondere ein vulkanisches Aluminiumsilikat, vorzugsweise Basalt, Pechstein, Obsidian, Phonolith, und/oder Metakaolin vorgeschlagen; als oxidische Komponente wird bevorzugt SiO₂ bzw. Al₂O₃ vorgeschlagen. Zwar werden in der WO 2011/106815 A1 keine Ausführungsbeispiele angegeben, aber es wurde gefunden, dass mit diesen Komponenten nur unzureichende Früh- und Endfestigkeiten der ausgehärteten Geopolymerschaum-Formulierung erreicht werden können. Es bestand daher ein Bedürfnis an nicht brennbaren anorganischen Schäumen mit ausreichender Früh- und Endfestigkeit.

Die der vorliegenden Erfindung zu Grunde liegende Aufgabe bestand also darin, die eingangs geschilderten Nachteile des Standes der Technik zumindest teilweise zu überwinden. Insbesondere sollte ein nicht brennbarer anorganischer Schaum zur Verfügung gestellt werden. Dieser sollte als poröser Schallabsorber verwendbar sein. Daneben sollte er eine ausreichende Früh- und Endfestigkeit aufweisen, damit seine praktische Handhabbarkeit gewährleistet ist.

Gelöst wurde diese Aufgabe mit den Merkmalen der unabhängigen Ansprüche. Die abhängigen Ansprüche beziehen sich auf bevorzugte Ausführungsformen.

Abgesehen davon, dass die gestellte Aufgabenstellung vollständig gelöst wurde, hat die erfindungsgemäße Geopolymerschaum-Formulierung den Vorteil, dass dieser einfach und kostengünstig herstellbar ist und in ausgehärteter Form gute Wärmedämmeigenschaften aufweist.

Ein erster Gegenstand der vorliegenden Erfindung betrifft eine Geopolymerschaum-Formulierung, umfassend mindestens ein anorganisches Bindemittel, welches Hochofenschlacke und zusätzlich Microsilica und/oder Metakaolin umfasst; mindestens einen alkalischen Aktivator, ausgewählt aus der Gruppe, bestehend aus Alkalimetallhydroxiden, Alkalimetallcarbonaten, Alkalimetallaluminaten, Alkalimetallsilikaten sowie Mischungen davon; mindestens ein Alkylpolyglucosid; eine Gasphase und Wasser.

Für die Zwecke der vorliegenden Erfindung soll "Geopolymerschaum-Formulierung" bedeuten, dass mit dieser Formulierung alle Komponenten vorliegen, die zur Bereitstellung eines Geopolymerschaums benötigt werden, also ein anorganisches Bindemittel, ein alkalischer Aktivator, ein Tensid, Wasser und eine Gasphase. Diese Komponenten können vorgemischt aber auch als sogenannter "Kit of Parts" getrennt voneinander vorliegen. Wie weiter unten noch ausgeführt wird, können das Wasser und der alkalische Aktivator getrennt von den anderen Komponenten vorgehalten werden oder der alkalische Aktivator kann in trockener Form zusammen mit den anderen Komponenten vorliegen, so dass nur noch Wasser zugegeben und geschäumt werden muss. Natürlich kann die Geopolymerschaum-Formulierung auch in bereits geschäumter Form vorliegen.

Bei der "Gasphase" kann es sich erfindungsgemäß um das in Pulverkomponenten vorliegende Gas handeln. Oft reicht diese Gasmenge indessen nicht aus. Es kann sich deshalb auch um in geeigneter Form bereitgestelltes Gas handeln, etwa in Form von Gasflaschen, Druckgas, Druckluft, etc. Selbst Wasserstoffgas, welches über eine Reaktion im alkalischen wässrigen Medium aus Metallen wie z.B. Mg, Al, Zn freigesetzt wird, Sauerstoffgas, welches im Alkalischen aus H₂O₂ oder Proxiden entsteht, Stickstoffgas, welches aus labilen stickstoffhaltigen Verbindungen entsteht, oder auch Gas in Form von (ggf. löslichen oder reaktiven) Mikrohohlkugeln soll für die Zwecke der vorliegenden Erfindung unter den Begriff Gasphase fallen. Mithin kann der Begriff "Gasphase" auch synonym mit "eine Gasphase enthaltende oder freisetzende Komponente" verstanden werden. Falls die Geopolymerschaum-Formulierung bereits in geschäumter Form vorliegt, bedeutet Gasphase natürlich wie weiter oben ausgeführt, dass in der Schaummatrix Gasbläschen vorliegen. In ausgehärteten "Geopolymerschaumelementen" werden die von den Gasbläschen freigehaltenen Bereiche mitunter auch als Luftporen bezeichnet.

Der Begriff "umfassend" soll im Sinne der vorliegenden Erfindung den engeren Begriff "bestehend aus" beinhalten, sich aber nicht darin erschöpfen. Weiterhin soll im konkreten Falle die Summe aller Prozentangaben der genannten und ungenannten Bestandteile der erfindungsgemäßen Formulierung jeweils 100 % betragen.

Anorganische Bindemittelsysteme, basierend auf reaktionsfähigen wasserunlöslichen Verbindungen auf der Basis von SiO₂ in Verbindung mit Al₂O₃, die in wässrig alkalischem Medium aushärten, sind allgemein bekannt. Solche Bindemittelsysteme werden u.a. auch "Geopolymere" genannt und sind z.B. in US 4,349,386, WO 85/03699 und US 4,472,199 beschrieben. Als reaktionsfähiges Oxid bzw. Oxidgemisch können dabei u.a. Microsilica, Metakaolin, Alumosilikate, Flugaschen, aktivierter Ton, Puzzolane oder Mischungen daraus eingesetzt werden. Das alkalische Medium zur Aktivierung der Bindemittel besteht üblicherweise aus wässrigen Lösungen von Alkalimetallcarbonaten, Alkalimetallfluoriden, Alkalimetallhydroxiden, Alkalimetallaluminaten und/oder Alkalimetallsilikaten wie z.B. löslichem Wasserglas. Im Vergleich zu Portlandzement können Geopolymere kostengünstiger und beständiger sein und eine günstigere CO₂-Emissionsbilanz aufweisen. Zum Begriff "Schaum" wird auf die Beschreibungseinleitung verwiesen.

Reine Geopolymere weisen durch die Verwendung der oben genannten Oxide in der Regel einen geringen Calciumgehalt auf. In unserer US 8,460,459 B2 wird ein anorganisches Bindemittelsystem beschrieben, welches 12 bis 25 Gew.-% CaO umfasst und die Produktion chemisch beständiger bauchemischer Produkte ermöglicht. (Allerdings wird dort kein Hinweis auf eine Geopolymerschaum-Formulierung bzw. auf ein Geopolymerschaumelement gegeben oder angedacht.)

Im Sinne der vorliegenden Erfindung soll unter einem "latent hydraulischen Bindemittel" vorzugsweise ein Bindemittel verstanden werden, bei dem das molare Verhältnis von (CaO + MgO) : SiO₂ zwischen 0,8 und 2,5 und besonders bevorzugt zwischen 1,0 und 2,0 liegt. Allgemein können die oben genannten latent hydraulischen Bindemittel aus industriellen und/oder synthetischen Schlacken, insbesondere aus Hochofenschlacke, elektrothermischer Phosphorschlacke, Edelstahlschlacke, sowie Mischungen davon, und die "puzzolanischen Bindemittel" aus amorpher Kieselsäure, vorzugsweise Fällungskieselsäure, pyrogener Kieselsäure und Microsilica, Glasmehl, Metakaolin, Alumosilikaten, Flugaschen, vorzugsweise Braunkohleflugasche und Steinkohleflugasche, natürlichen Puzzolanen wie Tuff, Trass und Vulkanasche, natürlichen und synthetischen Zeolithen, sowie Mischungen davon, ausgewählt sein.

Bei den Schlacken kann es sich sowohl um industrielle Schlacken, d.h. Abfallprodukte aus industriellen Prozessen, als auch um synthetisch nachgestellte Schlacken handeln. Letzteres kann vorteilhaft sein, da industrielle Schlacken nicht immer in gleichbleibender Menge und Qualität verfügbar sind.

Hochofenschlacke ("blast furnace slag", BFS) ist ein Abfallprodukt des Hochofenprozesses. Hüttensand ("granulated blast furnace slag", GBFS) ist granulierte Hochofenschlacke und Hüttensandmehl ("ground granulated blast furnace slag", GGBFS) fein pulverisierter Hüttensand. Das Hüttensandmehl variiert je nach Herkunft und Aufbereitungsform in seiner Mahlfeinheit und Korngrößenverteilung, wobei die Mahlfeinheit Einfluss auf die Reaktivität hat. Als Kenngröße für die Mahlfeinheit wird der sogenannte Blainewert herangezogen, welcher typischerweise in der Größenordnung von 200 bis 1000, vorzugsweise zwischen 300 und 500 m²kg⁻¹ liegt. Je feiner die Vermahlung ist, desto höher ist die Reaktivität.

Im Sinne der vorliegenden Erfindung sollen unter "Hochofenschlacke" indessen alle genannten Aufbereitungs-, Vermahlungs- und Qualitätsstufen (also BFS, GBFS und GGBFS) umfasst sein. Hochofenschlacke weist in der Regel 30 bis 45 Gew.-% CaO, ca. 4 bis 17 Gew.-% MgO, ca. 30 bis 45 Gew.-% SiO₂ und ca. 5 bis 15 Gew.-% Al₂O₃ auf, typischerweise ca. 40 Gew.-% CaO, ca. 10 Gew.-% MgO, ca. 35 Gew.-% SiO₂ und ca. 12 Gew.-% Al₂O₃.

Elektrothermische Phosphorschlacke ist ein Abfallprodukt der elektrothermischen Phosphorherstellung. Sie ist weniger reaktiv als Hochofenschlacke und enthält ca. 45 bis 50 Gew.-% CaO, ca. 0,5 bis 3 Gew.-% MgO, ca. 38 bis 43 Gew.-% SiO₂, ca. 2 bis 5 Gew.-% Al₂O₃ und ca. 0,2 bis 3 Gew.-% Fe₂O₃ sowie Fluorid und Phosphat. Edelstahlschlacke ("steel slag") ist ein Abfallprodukt verschiedener Stahlerzeugungsverfahren mit stark variierender Zusammensetzung.

Bei amorpher Kieselsäure handelt es sich vorzugsweise um eine röntgenamorphe Kieselsäure, d.h. um eine Kieselsäure, die im Pulverdiffraktionsverfahren keine Kristallinität zeigt. Die erfindungsgemäße amorphe Kieselsäure weist zweckmäßig einen Gehalt von mindestens 80 Gew.-%, vorzugsweise mindestens 90 Gew.-% SiO₂ auf. Fällungskieselsäure wird großtechnisch über Fällungsprozesse ausgehend von Wasserglas gewonnen. Fällungskieselsäure wird je nach Herstellungsverfahren auch Kieselgel genannt.

Pyrogene Kieselsäure wird durch Umsetzung von Chlorsilanen wie z.B. Siliciumtetrachlorid in der Knallgasflamme erzeugt. Pyrogene Kieselsäure ist ein amorphes SiO₂-Pulver von 5 bis 50 nm Teilchendurchmesser und einer spezifischen Oberfläche von 50 bis 600 m²g⁻¹.

Microsilica ist ein Nebenprodukt u.a. der Silicium- bzw. Ferrosiliciumherstellung und besteht ebenfalls größtenteils aus amorphem SiO₂-Pulver. Die Teilchen haben Durchmesser in der Größenordnung von 0,1 µm. Die spezifische Oberfläche liegt in der Größenordnung von 15 bis 30 m²g⁻¹.

Demgegenüber ist handelsüblicher Quarzsand kristallin und weist vergleichsweise große Teilchen und eine vergleichsweise kleine spezifische Oberfläche auf. Er dient erfindungsgemäß als inerter Füllstoff.

Flugaschen entstehen u.a. beim Verbrennen von Kohle in Kraftwerken. Flugasche der Klasse C (Braunkohleflugasche) enthält gemäß WO 08/012438 ca. 10 Gew.-% CaO, während Flugasche der Klasse F (Steinkohleflugasche) weniger als 8 Gew.-%, vorzugsweise weniger als 4 Gew.-% und typischerweise ca. 2 Gew.-% CaO enthält.

Metakaolin entsteht bei der Dehydrierung von Kaolin. Während Kaolin bei 100 bis 200 °C physikalisch gebundenes Wasser abgibt, findet bei 500 bis 800 °C eine Dehydroxylierung unter Zusammenbruch der Gitterstruktur und Bildung von Metakaolin (Al₂Si₂O₇) statt. Reines Metakaolin enthält demgemäß ca. 54 Gew.-% SiO₂ und ca. 46 Gew.-% Al₂O₃.

Unter Alumosilikaten sollen im Sinne der vorliegenden Erfindung die oben genannten, reaktionsfähigen Verbindungen auf der Basis von SiO₂ in Verbindung mit Al₂O₃, die in wässrig alkalischem Medium aushärten, verstanden werden. Dabei müssen Silicium und Aluminium natürlich nicht unbedingt in oxidischer Form vorliegen, wie dies z.B. beim Al₂Si₂O₇ der Fall ist. Es ist im Sinne der quantitativen chemischen Analyse von Alumosilikaten indessen üblich, die Anteile von Silicium und Aluminium in oxidischer Form (also als "SiO₂" und "Al₂O₃") anzugeben.

Eine Übersicht geeigneter Geopolymer-Rohstoffe findet sich z.B. bei Caijun Shi, Pavel V. Krivenko, Della Roy, Alkali-Activated Cements and Concretes, Taylor & Francis, London & New York, 2006, S. 6-63.

Als für die erfindungsgemäße Geopolymerschaum-Formulierung besonders geeignet haben sich, wie weiter oben ausgeführt, anorganische Bindemittel, umfassend Hochofenschlacke und zusätzlich Microsilica und/oder Metakaolin erwiesen. Während Metakaolin besonders gute Schäumungsergebnisse bewirkt, wobei die Verarbeitbarkeit, Streichbarkeit und der Schäumungsprozess begünstigt werden, indem weniger Zeit als bei Formulierungen mit Hüttensand und Microsilica bis zum Erreichen des gleichen Volumens benötigt wird, überzeugt Hochofenschlacke, insbesondere in Kombination mit Microsilica, durch hohe Früh- und Endfestigkeiten der erhältlichen Geopolymerschaumelemente.

Mit anderen Worten ist als latent hydraulisches Bindemittel Hochofenschlacke (in allen unterschiedlichen Aufbereitungs-, Vermahlungs- und Qualitätsstufen) und als puzzolanisches Bindemittel Microsilica, Metakaolin sowie Mischungen davon ausgewählt.
Es wird bevorzugt ein alkalischer Aktivator verwendet, der ausgewählt ist aus Alkalimetallhydroxiden der Formel MOH und Alkalimetallsilikaten der Formel m SiO₂ · n M₂O, wobei M das Alkalimetall ist, vorzugsweise Li, Na, K sowie Mischungen davon, und das Molverhältnis m:n ≤ 4.0, vorzugsweise ≤ 3.0, weiter bevorzugt ≤ 2.0, insbesondere ≤ 1.70, und ganz besonders bevorzugt ≤ 1.20 ist.

Bei dem Alkalisilikat handelt es sich bevorzugt um Wasserglas, besonders bevorzugt um ein wässriges Wasserglas und insbesondere um ein Natrium- oder Kaliumwasserglas. Es können aber auch Lithium- oder Ammoniumwassergläser, sowie Mischungen der genannten Wassergläser eingesetzt werden.

Das oben angegebene Verhältnis von m:n (auch "Modul" genannt) sollte vorzugsweise nicht überschritten werden, da ansonsten keine vollständige Reaktion der Komponenten mehr zu erwarten ist. Es können auch sehr viel geringere Module wie z.B. ca. 0,2 zur Anwendung kommen. Wassergläser mit höheren Modulen sollten vor der Anwendung mit einem geeigneten wässrigen Alkalihydroxid auf Module im erfindungsgemäßen Bereich eingestellt werden.

Kaliumwassergläser sind im zweckmäßigen Modulbereich vornehmlich als wässrige Lösungen im Handel, da sie stark hygroskopisch sind, Natriumwassergläser sind im zweckmäßigen Modulbereich kommerziell auch als Feststoffe erhältlich. Die Feststoffgehalte der wässrigen Wasserglaslösungen liegen in der Regel bei 20 Gew.-% bis 60 Gew.-%, vorzugsweise 30 bis 50 Gew.-%.

Wassergläser können industriell durch Schmelzen von Quarzsand mit den entsprechenden Alkalicarbonaten hergestellt werden. Sie können aber auch unschwer aus Mischungen reaktiver Kieselsäuren mit den entsprechenden wässrigen Alkalihydroxiden gewonnen werden. Es ist daher erfindungsgemäß möglich, zumindest einen Teil des Alkalisilikats durch eine Mischung aus einer reaktiven Kieselsäure und dem entsprechenden Alkalihydroxid zu ersetzen.

Aus diesem Grunde besteht eine bevorzugte Ausführungsform der vorliegenden Erfindung darin, dass der alkalische Aktivator eine Mischung aus Alkalimetallhydroxiden und Alkalimetallsilikaten umfasst.

Erfindungsgemäß ist der alkalische Aktivator, bezogen auf die erfindungsgemäße Geopolymerschaum-Formulierung, vorzugsweise in einer Menge von 1 bis 55 Gew.-% und insbesondere in einer Menge von 20 bis 50 Gew.-% enthalten, wobei hier die Feststoffgehalte gemeint sind.

Das eingangs erwähnte Alkylpolyglucosid ist ein unverzichtbarer Bestandteil der erfindungsgemäßen Geopolymerschaum-Formulierung. Nur bei gleichzeitigem Vorliegen von Alkylpolyglucosid und Wasser ist es möglich, in dieser Geopolymerschaum-Formulierung eine Gasphase in Form von Gasbläschen zu stabilisieren, die im ausgehärteten Geopolymerschaum bzw. im weiter unten beschriebenen Geopolymerschaumelement für die vorzugsweise offenzellige Porenstruktur verantwortlich sind.

Alkylpolyglucoside weisen in der Regel die Formel H-(C₆H₁₀O₅)ₘ-O-R¹ auf, wobei (C₆H₁₀O₅) für eine Glucose-Einheit und R¹ für eine C₆₋₂₂-Alkylgruppe, vorzugsweise eine C₈₋₁₆-Alkylgruppe und insbesondere eine C₈₋₁₂-Alkylgruppe steht, und m = 1 bis 5 ist.

Ein Teil des Tensids, bevorzugt weniger als 30 Gew.-%, kann durch verseifte Balsam- und Tallharze ersetzt werden. Beispielsweise kann hierbei Vinapor® MTZ/K50 der BASF SE eingesetzt werden, wobei es sich um pulverförmiges, sprühgetrocknetes modifiziertes und verseiftes Balsam- und Tallharz handelt, welches für gewöhnlich als Luftporenbildner eingesetzt wird.

Der Anteil des Tensids, bezogen auf die erfindungsgemäße Geopolymerschaum-Formulierung, kann vorteilhaft von 0,1 bis 2,5 Gew.-% und insbesondere von 0,5 bis 1,5 Gew.-% betragen.

Die vorstehend genannte Gasphase ist zweckmäßig aus der Gruppe, bestehend aus Luft, Stickstoff, Edelgas, Kohlenwasserstoffen sowie Mischungen davon, ausgewählt. Sie kann durch chemische Prozesse (etwa dem Zerfall von H₂O₂, Peroxiden oder von stickstoffhaltigen Verbindungen) oder durch mechanisches Verschäumen, wie weiter unten ausgeführt wird, in die Formulierung eingebracht werden.

Es stellt eine bevorzugte Ausführungsform der vorliegenden Erfindung dar, dass die Gasphase 20 bis 90 Volumenprozent, insbesondere 50 bis 80 Volumenprozent der Geopolymerschaum-Formulierung ausmacht.

Die erfindungsgemäße Formulierung ist weiterhin dadurch gekennzeichnet, dass sie zweckmäßig zwischen 10 und 60 Gew.-%, vorzugsweise zwischen 25 und 50 Gew.-% Wasser umfasst.

Anders ausgedrückt liegt das gewichtsmäßige Verhältnis von Wasser zu Bindemittel (w/b-Wert), wobei der Festgehalt des alkalischen Aktivators zum Bindemittel und der Wassergehalt des alkalischen Aktivators zum Wasser gezählt werden muss, zwischen 0,11 und 1,5, insbesondere zwischen 0,33 und 1,0.

Insgesamt kann die erfindungsgemäße Geopolymerschaum-Formulierung
3 - 60 Gew.-%, vorzugsweise 5 - 50 Gew.-% Hochofenschlacke,
3 - 70 Gew.-%, vorzugsweise 5 - 50 Gew.-% Microsilica und/oder Metakaolin,
0 - 50 Gew.-% Flugasche,
1 - 55 Gew.-% alkalischen Aktivator (gerechnet als Feststoffgehalt),
10 - 60 Gew.-% Wasser (Gesamtmenge)
sowie Alkylpolyglucosid, Gasphase und ggf. weitere Additive umfassen.

Der Ausdruck "Gesamtmenge" berücksichtigt die Tatsache, dass der alkalische Aktivator ebenfalls Wasser enthalten kann. Dieses wird aber zu den 10 - 60 Gew.-% Wasser gerechnet.

Vorzugsweise kann die erfindungsgemäße Geopolymerschaum-Formulierung
20 - 75 Gew.-% anorganisches Bindemittel,
3 - 50 Gew.-% alkalischen Aktivator (gerechnet als Feststoffgehalt),
10 - 50 Gew.-% Wasser (Gesamtmenge)
sowie Alkylpolyglucosid, Gasphase und ggf. weitere Additive umfassen.

Gemäß einer besonders bevorzugten Ausführungsform kann die erfindungsgemäße Geopolymerschaum-Formulierung
20 - 50 Gew.-% anorganisches Bindemittel,
5 - 25 Gew.-% alkalischen Aktivator (gerechnet als Feststoffgehalt),
10 - 40 Gew.-% Wasser (Gesamtmenge)
sowie Alkylpolyglucosid, Gasphase und ggf. weitere Additive umfassen.

In der erfindungsgemäßen Geopolymerschaum-Formulierung hat sich ein Verhältnis von Silicium- zu Aluminium-Atomen zwischen 10 : 1 und 1 : 1 als vorteilhaft erwiesen, wobei ein Verhältnis zwischen 6 : 1 und 1,5 : 1 und insbesondere zwischen 1,8 :1 und 2,2 : 1 sowie zwischen 4,7 : 1 und 5,3 : 1 bevorzugt ist.

Das Erstarrungsverhalten bzw. die Abbindezeit der erfindungsgemäßen Geopolymerschaum-Formulierung kann positiv durch die Zugabe von Zement beeinflusst werden. Hier eignen sich insbesondere Portlandzement, Calciumaluminat-Zement sowie Mischungen davon. Calciumaluminat-Zement wird hier besonders bevorzugt. Auch Kompositzemente sind einsetzbar.

Portlandzement enthält ca. 70 Gew.-% CaO + MgO, ca. 20 Gew.-% SiO₂ und ca. 10 Gew.-% Al₂O₃ + Fe₂O₃. Calciumaluminatzement enthält ca. 20 bis 40 Gew.-% CaO, bis etwa 5 Gew.-% SiO₂, ca. 40 bis 80 Gew.-% Al₂O₃ und bis etwa 20 Gew.-% Fe₂O₃. Diese Zemente sind im Stand der Technik wohlbekannt (vergl. DIN EN 197).

Vorzugsweise beträgt der Anteil des Zements in der Geopolymerschaum-Formulierung mindestens 1 Gew.-%, vorzugsweise mindestens 2 Gew.-% und insbesondere mindestens 3 Gew.-%. Die Abbindezeit kann weiterhin durch die Zugabe von Ca(OH)₂ gesteuert werden. Der Anteil von Ca(OH)₂, bezogen auf die erfindungsgemäße Geopolymerschaum-Formulierung, kann von 1 bis 15 Gew.-%, insbesondere von 3 bis 10 Gew.-% betragen. Maximal sollte der Zement-Anteil in der erfindungsgemäßen Formulierung höchstens 20 Gew.-% betragen, vorzugsweise höchstens 10 Gew.-% und insbesondere höchstens 5 Gew.-%. Wie eingangs erwähnt, muss hier die Summe aller Prozentangaben der genannten und ungenannten Bestandteile der erfindungsgemäßen Formulierung jeweils 100 % betragen.

In der erfindungsgemäßen Geopolymerschaum-Formulierung kann eine Reihe weiterer Additive vorhanden sein. Die Formulierung kann zusätzlich mindestens ein Additiv zur Schaumstabilisierung, Schrumpfminderung, Flexibilisierung, Hydrophobierung, und Dispergierung, Fasern und Füllstoffe, sowie Mischungen davon, enthalten.

Zur Schaumstabilisierung können Additive aus der Gruppe, bestehend aus pyrogener Kieselsäure, Eiweißen, Rheologie-modifizierenden Mitteln, wie z.B. Stärken (u.a. Xanthan Gum, Diutan Gum), modifizierten Stärken, Sulfo- und/oder quaternisierte Ammoniumgruppen tragenden Poly(meth)acrylaten und -(meth)acrylamiden, sowie Mischungen davon, eingesetzt werden.

Sulfogruppen und/oder quaternisierte Ammoniumgruppen tragende Poly(meth)acrylate und -acrylamide werden beispielsweise in unseren Patentanmeldungen WO 2008/151-878 A1, WO 2007/017286 A1, WO 2005/090424 A1 und WO 02/10229 A1 beschrieben. Derartige (Co)Polymere werden auch als superabsorbierende Polymere (SAP) bzw. salzstabile superabsorbierende Polymere ("salt insensitive superabsorbing polymers", SISA) bezeichnet. Allgemein handelt es sich hier um Rheologie-modifizierende Mittel, Verdicker bzw. Wasserretentionsmittel. Gerade auf Grund der hohen Alkalinität und der damit verbundenen hohen Salzfracht der hier betrachteten Geopolymerschaum-Formulierungen eignen sich hier SISAs ganz besonders gut als Verdicker.

Es wurde überraschend gefunden, dass die Verarbeitbarkeit des Schaumes durch die Zugabe von Superabsorbern verbessert werden kann. Durch die Zugabe von salzstabilen superabsorbierenden Polymeren kann die Steifigkeit deutlich vergrößert und ein verflüssigendes Verhalten der Siliaktschäume verhindert werden.

Zur Schrumpfminderung können Additive aus der Gruppe, bestehend aus Aminen, Lactamen, Alkanolaminen, Betain(en), Glykolen, Polyolen, Alumosilikathohlkugeln, Glashohlkugeln, Blähglas sowie Mischungen davon, eingesetzt werden. Alumosilikathohlkugeln können in diesem Zusammenhang sowohl als ein Additiv zur Schrumpfminderung als auch als puzzolanisches Bindemittel angesehen werden. Alumosilikathohlkugeln mit einer Korngröße von maximal 100 µm werden bevorzugt. Vorzugsweise beträgt der Anteil an Mikrohohlkugeln in der erfindungsgemäßen Geopolymerschaum-Formulierung maximal 30 Gew.-%.

Zur Flexibilisierung können Additive aus der Gruppe, bestehend aus redispergierbaren Polymerpulvern, Polyisocyanaten, Polyisocyanat-Präpolymeren, Epoxidharzen, Epoxidverbindungen, (filmbildenden) Acrylatdispersionen, sowie Mischungen davon, eingesetzt werden.

In einer bevorzugten Ausführungsform umfasst die erfindungsgemäße Geopolymerschaum-Formulierung ein Epoxidharz. Hierdurch können die mechanischen Eigenschaften verbessert werden, insbesondere im Hinblick auf die Rissbildung, Biegezugfestigkeit und die Haptik des ausgehärteten Schaums. Die erfindungsgemäßen ausgehärteten Geopolymerschäume haben u.a. den wesentlichen Vorteil, dass sie nicht brennbar sind und weiterhin im Vergleich zu einigen anderen Schäumen, wie etwa Melaminharzschäumen, kein Formaldehyd freisetzen können. Der Anteil des Epoxidharzes in der Geopolymerschaum-Formulierung kann insbesondere von 0,5 bis 10 Gew.-% betragen. Im Hinblick auf die geforderte Nichtbrennbarkeit des ausgehärteten Schaums hat sich ein Anteil von 1 bis 5 Gew.-% als besonders vorteilhaft erwiesen.

In einer anderen bevorzugten Ausführungsform umfasst die erfindungsgemäße Geopolymerschaum-Formulierung eine wasseremulgierbare Epoxidverbindung und/oder mindestens eine selbstemulgierende Epoxidharzemulsion. Neben den bereits beschrieben Vorteilen verleiht das Epoxidharz dem erhärtenden Geopolymerschaum eine frühere mechanische Stabilität, so dass der erhärtete Geopolymerschaum früher aus der Form entnommen werden kann. Darüber hinaus kann die Aushärtung im Falle von Epoxid-Zusatz bereits bei +5 °C erfolgen. Die Epoxidverbindungen können ein Harz und Härter oder eine Kombination von Harz, Härter und Reaktivverdünner umfassen. Beim dem Epoxid handelt sich bevorzugt um eine Bisphenol A/F Mischung und bei dem Härter bevorzugt um ein Polyaminoaddukt. Als Reaktivverdünner werden bevorzugt Polyglycidether von alkoxylierten aliphatischen Alkoholen eingesetzt.

In einer weiter bevorzugten Ausführungsform wird ein Epoxidharz mit einem Reaktivverdünner im Verhältnis von 60:40 bis 40:60 Gewichtsteilen gemischt und weiterhin bevorzugt werden zu dieser Mischung 140 bis 160 Gewichtsteile Härter zugegeben. Als Epoxidharz kann insbesondere eine sebstdispergierende Epoxidharzemulsion eingesetzt werden, welche bevorzugt im stöchiometrischen Verhältnis von 0,9 : 1 bis 1,1 : 1 mit einem Polyaminoamidaddukt verwendet wird. Als kommerziell verfügbare sebstdispergierende Epoxidharzemulsionen kommen beispielsweise Waterpoxy® 1422, Waterpoxy® 1439, Waterpoxy® 1466 und Härter Waterpoxy® 751, Waterpoxy® 760, Waterpoxy® 801 in Frage. Bevorzugt ist der Einsatz einer Mischung von Waterpoxy® 1422 und Waterpoxy® 760. Die genannten Epoxidemulsionen sind Produkte der BASF SE.

Zur Hydrophobierung können Additive aus der Gruppe, bestehend aus Triglyceriden, Paraffinen, Polysiloxanen, Hydrogensilanen, Alkoxysilanen, Natriummethylsilikonat, sowie Mischungen davon, eingesetzt werden. Polysiloxane werden in der Regel in Form von Silikonölen eingesetzt. Bevorzugt kann ein Silikonöl mit einer Viskosität von 300 bis 1000 mPa*s verwendet werden. Ein geeignetes kommerziell verfügbares Produkt ist beispielsweise Silikonöl AK 500 der Wacker Chemie AG.

Zur Dispergierung können Additive aus der Gruppe, bestehend aus Naphthalinsulfonat, Ligninsulfonat, Kammpolymeren, wie Polycarboxylatethern, kammförmigen polyaromatischen Ethern, kammförmigen kationischen Copolymeren sowie Mischungen davon, eingesetzt werden. Derartige Dispergierungsmittel sind im Stand der Technik wohlbekannt. Kammförmige polyaromatische Ether, die sich besonders gut zur Verflüssigung von silikathaltigen Geopolymersystemen eignen, sind z.B. in unserer WO 2013/152963 A1 beschrieben. Kammförmige kationische Copolymere, die sich besonders gut zur Verflüssigung von hochalkalischen Geopolymersystemen eignen, sind z.B. in unserer prioritätsbegründenden Patentanmeldung EP 13186438 vom 27.09.2013 beschrieben.

Die eingangs erwähnten Fasern können aus der Gruppe, bestehend aus Steinfasern (wie z.B. Basaltfasern), Glasfasern, Kohlefasern, ggf. modifizierten organischen Fasern (PE, PP, PVA, PAN, Polyester, Polyamide und dergleichen), Zellulosefasern, Lignozellulosefasern, Metallfasern (wie z.B. Eisen, Stahl und dergleichen), sowie Mischungen davon, ausgewählt sein. Die Fasern können vorzugsweise in einem Anteil von bis zu 3 Gew.-% vorliegen. Hierdurch kann die mechanische Stabilität des ausgehärteten Schaums verbessert werden. Sie weisen vorzugsweise eine Länge von maximal 120 mm, insbesondere von maximal 6 mm auf.

Die eingangs erwähnten Füllstoffe können aus der Gruppe, bestehend aus Quarzsand bzw. Quarzmehl, Calciumcarbonat, Gesteinsmehlen, natürlichen und synthetischen Graphiten, Leichtfüllstoffen (wie z.B. Vermiculit, Perlit, Diatomeenerde, Glimmer, Talkum, Magnesiumoxid, Blähglas, Schaumsand), Pigmenten (wie z.B. Titandioxid), Schwerfüllstoffen (wie z.B. Bariumsulfat), Metallsalzen (wie z.B. Zinksalzen, Calciumsalzen, etc.), sowie Mischungen davon, ausgewählt sein. Geeignet sind hierbei insbesondere Korngrößen von bis zu 1 mm. Bevorzugt wird Blähglas eingesetzt. Insbesondere bevorzugt hat das Blähglas eine mittlere Korngröße von 50-300 µm. Es können aber auch Verzögerer, Beschleuniger, Komplexbildner, und dergleichen in der Geopolymerschaum-Formulierung enthalten sein.

In der erfindungsgemäßen Geopolymerschaum-Formulierung können entweder alle Bestandteile gemeinsam als eine Komponente vorliegen oder es können feste Bestandteile in einer ersten, festen Komponente und das Wasser in einer zweiten, flüssigen Komponente bereitgehalten werden (und erst unmittelbar vor ihrer Anwendung miteinander vermischt und aufgeschäumt werden). Während die zweikomponentige Ausführungsform handelsfähig ist, eignet sich die einkomponentige Ausführungsform vor allem dazu, vor Ort fertige Geopolymerschaumelemente zu produzieren.

Der ausgehärtete und auf einen Restwassergehalt von ca. 5 Gew.-% getrocknete Geopolymerschaum weist bevorzugt eine Dichte von 120 bis 400 kg/m³, besonders bevorzugt von 240 bis 350 kg/m³ und insbesondere von maximal 300 kg/m³ auf (d.h. die "Trockenrohdichte"). In einer bevorzugten Ausführungsform liegt eine offenzellige Struktur vor. Er ist zur geklebten, gedübelten, genagelten und/oder geschraubten Anbringung bestens geeignet, kann aber auch als erfindungsgemäße Geopolymerschaum-Formulierung durch Gießen, Sprühen, und/ oder Rollen aufgebracht und anschließend aushärten und trocknen gelassen werden.

Ein weiterer Gegenstand der vorliegenden Erfindung bezieht sich auf ein Verfahren zur Herstellung der erfindungsgemäßen Geopolymerschaum-Formulierung, welches dadurch gekennzeichnet ist, dass die Formulierung einer Schäumung durch mechanischen Eintrag von Gas, insbesondere von Luft unterzogen wird. Besonders bevorzugt für die akustische Wirksamkeit sollte der Schaum ein Luftgehalt von 50 bis 80 Volumenprozent aufweisen. Dies kann mit Hilfe eines Stator-Rotor-Verfahrens, eines oszillierenden Verfahrens oder mittels mechanischen Rührens durchgeführt werden.

In einer speziellen Ausführungsform werden die Komponenten der erfindungsgemäßen Geopolymerschaum-Formulierung miteinander gemischt, wobei beispielsweise ein handelsüblicher Baustellenmischer zum Einsatz kommen kann. Hierbei wird bevorzugt eine Suspension mit einer Dichte von 1000-1200 g/Liter gebildet. Diese Suspension kann anschließend in einem Mischkopf, der nach dem Stator-Rotor Arbeitsprinzip aufgebaut ist, mit Luft geschäumt werden. Geeignete Geräte sind hierbei beispielsweise die Modelle Mügromix+ und Sicomix der Firma Heitec Auerbach GmbH. Ein für das oszillierende Verfahren besonders geeignetes Gerät wird unter der Bezeichnung "beba Schaummischer" von der Firma beba Mischtechnik GmbH vertrieben.

Bevorzugt beträgt die Nassrohdichte des Schaums 100 bis 800 g/Liter, insbesondere 150 bis 600 g/Liter. Das erfindungsgemäße Verfahren sieht weiterhin vor, dass der Geopolymerschaum bevorzugt bei Temperaturen von 20 bis 30°C und einer relativen Luftfeuchtigkeit von mindestens 65% getrocknet wird. Die Ausschalung kann nach 24 bis 48 Stunden erfolgen. (Im Falle von Epoxid-Zusatz bereits nach 12 Stunden.)

Ein weiterer Gegenstand der vorliegenden Erfindung ist die Verwendung der erfindungsgemäßen Geopolymerschaum-Formulierung zur Herstellung eines nicht brennbaren, schallabsorbierenden, wärmedämmenden Geopolymerschaumelements.

Nicht zuletzt besteht ein weiterer Gegenstand der vorliegenden Erfindung in einem nicht brennbaren, schallabsorbierenden, wärmedämmenden Geopolymerschaumelement, welches die erfindungsgemäße Geopolymerschaum-Formulierung umfasst.

Dieses erfindungsgemäße Geopolymerschaumelement liegt vorzugsweise in Plattenform vor, mit 2 cm bis 20 cm, vorzugsweise 4 cm bis 8 cm Dicke und 20 cm bis 150 cm, vorzugsweise ca. 60 cm Kantenlänge.

Als Vorteil des erfindungsgemäßen Geopolymerschaumelements ist dessen vorteilhaftes Brandverhalten zu nennen. Auch bei der Verwendung von organischen Zusätzen, insbesondere auch in Anwesenheit von Epoxidharzen, wurden sehr gute Ergebnisse erzielt. Es entsteht kein Rauch oder abtropfendes Material während der Beflammung (DIN EN ISO 11925-2). Der erfindungsgemäße Geopolymerschaum weist hierbei insbesondere ein Brandverhaltenen nach DIN 13501-1 von A2 oder A1 auf.

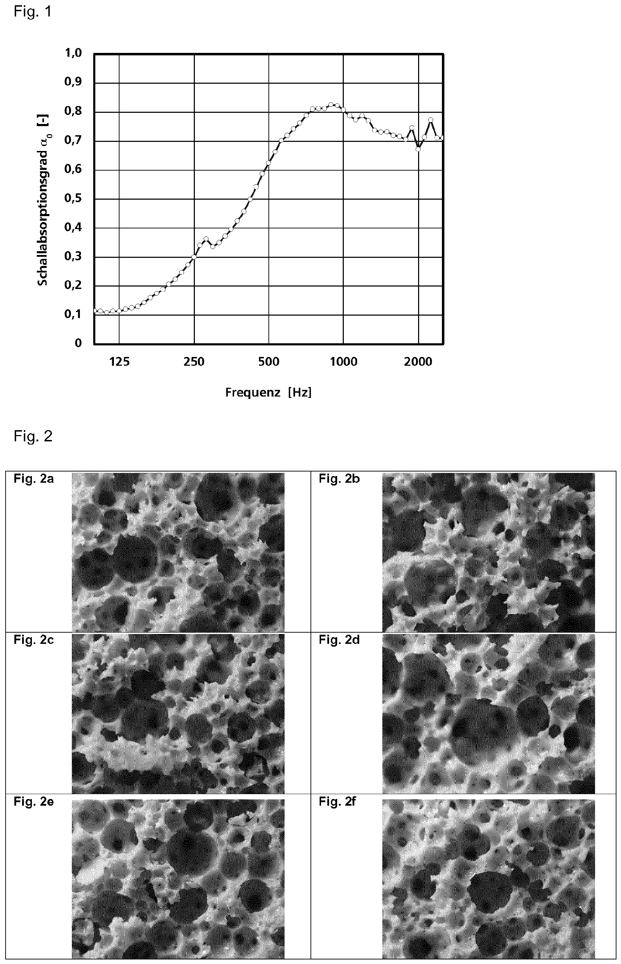

Der Schallabsorptionsverlauf eines erfindungsgemäßen Geopolymerschaumelements (gemäß Beispiel 3 mit einer Trockenrohdichte von 270 kg/m³ und einer Dicke von 40 mm, senkrechter Schalleinfall im Kund'tschen Rohr) ist in Fig. 1 wiedergegeben. Die Messungen wurden vom IBP-Institut der Fraunhofer-Gesellschaft nach DIN EN ISO 354 (2003) bzw. DIN EN ISO 11654 (1997) durchgeführt. Für die Schallabsorbtion besonders geeignet sind Trockenrohdichte von 240 bis 350 kg/m³.

Die Druckfestigkeiten des erfindungsgemäßen Geopolymerschaumelements betragen nach 7 Tagen Aushärtung bei 23 - 25 °C und 65 % rel. Luftfeuchtigkeit, wobei die Prüfkörper bis zum Ausschalen mit Folie bedeckt sind, je nach Zusammensetzung von 0,1 bis 1,4 MPa, wobei entsprechend der eingangs gestellten Aufgabe natürlich die höheren Werten bevorzugt werden.

Die Wärmedämmwerte des erfindungsgemäßen Geopolymerschaumelements liegen im Bereich von 40 bis 80 mW/(m*K).

Weiterhin ist es auch möglich, das erfindungsgemäße plattenförmige Geopolymerschaumelement mit einer Verkleidung zu versehen, wobei darauf zu achten ist, dass hierdurch die schallabsorbierenden Eigenschaften des Elements nicht wesentlich verschlechtert werden. Geeignet sind hierbei Wollvlies, Putz, Farbe und Textilien mit einer offenporigen, schalloffenen Struktur. Besonders gut geeignet ist Glasfaser-Armierungsvlies. Insbesondere die Textilen können mit einem Farb- bzw. Druckmotiv versehen sein.

Die vorliegende Erfindung wird nun anhand der nachfolgenden, nicht limitierenden Beispiele und der beigefügten Abbildung näher erläutert. In den Zeichnungen zeigt:
Fig. 1 den Schallabsorptionsverlauf eines Geopolymerschaumelements,
Fig. 2 die Porenstrukturen ausgehärteter Proben.

### BEISPIELE

### Beispiel 1: Herstellung eines Geopolymerschaums aus Metakaolin und Flugasche (Referenz)

Die in Tabelle 1 aufgeführten Komponenten:

**Tabelle 1**

| | Erklärung, Handelsbezeichnung (Hersteller) | Masse [g] | Gew.-% |
|---|---|---|---|
| Kalilauge, 1 M | Emsure® (Merck KGaA) | 50,04 | 16,41 |
| Kaliumwasserglas | K 45 M (Wöllner GmbH + Co. KG) | 87,50 | 28,70 |
| Tensid | C₈₋₁₀-Alkyl-Polyglucosid (m = 1-5), Glucopon® DK225 (BASF SE) | 2,20 | 0,72 |
| Metakaolin | Metamax® (BASF SE) | 71,10 | 23,32 |
| Hohlkugeln | Alumosilikathohlkugeln, Fillite® 106 (Omya GmbH) | 55,60 | 18,23 |
| Flugasche | Kraftwerk Lühnen (STEAG Power Minerals GmbH) | 15,50 | 5,08 |
| Dispersionspulver | Polyacrylatdispersionspulver, Acronal® S430 P (BASF SE) | 15,00 | 4,92 |
| Fasern | Polyacrylnitril, 6,7dtex/6mm (Trevira GmbH) | 8,00 | 2,62 |
| Gesamte Masse | | 304,94 | 100,00 |

wurden bis auf das Tensid mit einem Handmischgerät gemischt. Es entstand eine Suspension mit einer Dichte von 1000-1200 g/l. Zum Schluss wurde das Tensid zugegeben und für weitere 30 Sekunden gemischt. Die Suspension wurde über einen Schlauch in einen Schaumvollautomaten für kontinuierliches Verschäumen von Flüssigkeiten und niederviskosen Pasten, der nach dem Stator-Rotor-Prinzip arbeitete (Typ Mügromix+ der Firma Heitec Auerbach GmbH), gepumpt. Die Prozessparameter waren wie folgt: Mischkopfdrehzahl 300 U/min, Systemluftdruck ∼2 bar, Materialdurchsatz 120 Liter/Stunde. Der erzeugte Schaum hatte eine Dichte von 375 g/Liter und wies einen Luftgehalt von 55 Volumenprozent. Der Luftgehalt wurde hierbei über die Änderung des Volumens gegenüber der ungeschäumten Suspension in Anlehnung an DIN EN 1015-6 bestimmt. Es wurden folgende Eigenschaften erhalten:
Trockenrohdichte: 274 kg/m³
Frühfestigkeit nach 14 Tagen: 0,12 - 0,24 MPa
Endfestigkeit nach ≥ 28 Tagen: 1,2 MPa
Wärmeleitfähigkeit: 46-48 mW/mK

### Beispiel 2: Herstellung eines Geopolymerschaums aus Hochofenschlacke, Microsilica und Metakaolin

Das Beispiel 1 wurde mit den in Tabelle 2 aufgeführten Komponenten wiederholt:

**Tabelle 2**

| | Erklärung, Handelsbezeichnung (Hersteller) | Masse [g] | Gew.-% |
|---|---|---|---|
| Leitungswasser | | 16,30 | 5,75 |
| Kalilauge, 1 M | Emsure® (Merck KGaA) | 22,20 | 7,82 |
| Kaliumwasserglas | K 42 (Wöllner GmbH + Co. KG) | 120,00 | 42,30 |
| Tensid | Glucopon® DK225 (BASF SE) | 2,21 | 0,78 |
| Metakaolin | Metamax® (BASF SE) | 37,00 | 13,04 |
| Microsilica | RW Füller Q1 (RW silicium GmbH) | 37,00 | 13,04 |
| Hüttensand | Heidelberger Hüttensand (HeidelbergCement AG) | 37,00 | 13,04 |
| Betain | (Sigma-Aldrich) | 10,00 | 3,52 |
| Silikonöl | Silikonöl AK 500 (Wacker Chemie AG) | 2,00 | 0,71 |
| Gesamte Masse | | 283,71 | 100,00 |

Es wurden folgende Eigenschaften erhalten:
Trockenrohdichte: 261 kg/m³
Frühfestigkeit nach 7 Tagen: 1,2 MPa
Endfestigkeit nach ≥ 28 Tagen: 3,3 MPa
Wärmeleitfähigkeit: 50 mW/mK

Ein Vergleich zwischen Beispiel 1 und Beispiel 2 zeigt, dass bei nahezu gleichen Wärmeleitfähigkeiten mit der Rezeptur aus Hochofenschlacke, Microsilica und Metakaolin deutlich höhere Früh- und Endfestigkeiten erreicht werden konnten.

### Beispiel 3: Herstellung eines Geopolymerschaums aus Metakaolin und Flugasche (Referenz)

Das Beispiel 1 wurde mit den in Tabelle 3 aufgeführten Komponenten wiederholt:

**Tabelle 3**

| | Erklärung, Handelsbezeichnung (Hersteller) | Masse [g] | Gew.-% |
|---|---|---|---|
| Leitungswasser | | 52,65 | 18,27 |
| Kaliumhydroxid | | 2,95 | 1,02 |
| Kaliumwasserglas | K 45 M (Wöllner GmbH + Co. KG) | 97,20 | 33,74 |
| Tensid | Glucopon® DK225 (BASF SE) | 2,21 | 0,77 |
| Metakaolin | Argical® M 1200 S (AGS SA, Clerac) | 55,53 | 19,27 |
| Hohlkugeln | Alumosilikathohlkugeln, Fillite® 106 (Omya GmbH) | 55,53 | 19,27 |
| Flugasche | Kraftwerk Lühnen (STEAG Power Minerals GmbH) | 15,50 | 5,38 |
| Dispersionspulver | Ethylen-Vinylester-Vinylacetat-Terpolymer, Vinnapas® 7055 E (Wacker Chemie AG) | 1,39 | 0,48 |
| Diethanolamin | | 2,00 | 0,69 |
| Silikonöl | Silikonöl AK 500 (Wacker Chemie AG) | 2,00 | 0,69 |
| Fasern | Polyacrylnitril, 6,7dtex/6mm (Trevira GmbH) | 1,20 | 0,42 |
| Gesamte Masse | | 288,16 | 100,00 |

Es wurden folgende Eigenschaften erhalten:
Trockenrohdichte: 270 kg/m³
Endfestigkeit nach ≥ 28 Tagen: 1,4 MPa
Wärmeleitfähigkeit: 47-48 mW/mK

Der Schallabsorptionsverlauf eines nach Beispiel 3 gefertigten Geopolymerschaumelements mit einer Dicke von 40 mm bei senkrechtem Schalleinfall im Kund'tschen Rohr ist in Fig. 1 wiedergegeben.

### Beispiel 4: Einfluss eines superabsorbierenden Polymers (Referenz)

Das Beispiel 1 wurde mit den in Tabelle 4 aufgeführten Komponenten wiederholt:

**Tabelle 4**

| | Erklärung, Handelsbezeichnung (Hersteller) | Masse [g] | Gew.-% |
|---|---|---|---|
| Kalilauge, 1 M | Emsure® (Merck KGaA) | 57,14 | 17,40 |
| Kaliumwasserglas | K 45 M (Wöllner GmbH + Co. KG) | 99,87 | 30,40 |
| Tensid | C₈₋₁₀-Alkyl-Polyglucosid (m = 1-5), Glucopon® DK225 (BASF SE) | 1,87 | 0,57 |
| Metakaolin | Metamax® (BASF SE) | 85,00 | 25,87 |
| Hohlkugeln | Alumosilikathohlkugeln, Fillite® 106 (Omya GmbH) | 62,57 | 19,04 |
| Dispersionspulver | Polyacrylatdispersionspulver, Acronal® S430 P (BASF SE) | 1,55 | 0,47 |
| Superabsorber *) | | 2,50 | 0,76 |
| Diethanolamin | | 3,92 | 1,19 |
| Silikonöl | Silikonöl AK 500 (Wacker Chemie AG) | 6,19 | 1,88 |
| Fasern | Polyacrylnitril, 6,7dtex/6mm (Trevira GmbH) | 7,96 | 2,42 |
| Gesamte Masse | | 328,57 | 100,00 |

| | | | |
|---|---|---|---|
| *) Anionisches Copolymer aus 28 mol-% AMPS®-Na und 72 mol-% Acrylamid ("Copolymer 1" aus WO 2008/151878 A1) | | | |

Diese Rezeptur wurde mit den in der Tabelle 5 aufgeführten Abwandlungen wiederholt. Es wurde auf jeweils 900 ml Schaumvolumen geschäumt. Das Ausbreitmaß wurde in Anlehnung an DIN EN 1015-3 bestimmt.

**Tabelle 5**

| | Ausbreitmaß [mm] nach | | | |
|---|---|---|---|---|
| | 3 min | 10 min | 25 min | 60 min |
| ohne Superabsorber | 131,5 | 139,3 | 147,1 | 152,0 |
| mit 0,76% Superabsorber | 124,5 | 132,5 | 138,8 | 141,3 |
| mit 1,21% Superabsorber | 118,2 | 124,6 | 131,1 | 135,1 |

Dieses Beispiel zeigt, dass das Fließverhalten des Geopolymerschaums mit Hilfe des Superabsorbers stabilisiert werden konnte. Mit zunehmender Konzentration an Superabsorber wird der Mischung steifer. Erste Änderungen des Fließverhaltens traten unmittelbar nach der Applikation auf. Mit zunehmender Reaktionszeit wurden die Unterschiede im Ausbreitverhalten deutlicher, da in der Mischung ohne Superabsorber ein Verflüssigungseffekt auftrat. Nach 3 Minuten konnten in Abhängigkeit von der Konzentration des Superabsorbers 7,0 mm bzw. 13,4 mm kleinere Ausbreitmasse im Vergleich zur Referenzmischung gemessen werden.

### Beispiel 5: Einfluss eines Wasserretentionsmittels (Referenz)

Das Beispiel 4 wurde mit den in Tabelle 6 aufgeführten Komponenten wiederholt:

**Tabelle 6**

| | Erklärung, Handelsbezeichnung (Hersteller) | Gew.-% |
|---|---|---|
| Leitungswasser | | 18,54 |
| Kaliumhydroxid | (Kaliumhydroxid ist hier optional) | 1,04 |
| Kaliumwasserglas | K 45 M (Wöllner GmbH + Co. KG) | 34,27 |
| Tensid | Glucopon® DK 225 (BASF SE) | 0,86 |
| Metakaolin | Metamax® (BASF SE) | 23,50 |
| Hohlkugeln | Fillite® 106 (Omya GmbH) | 21,79 |
| Gesamtmenge | | 100,00 |

Durch Zugabe eines Wasserretentionsmittels bzw. Rheologiemodifizierers (Starvis® 308 F, ein hochmolekulares AMPS®-Na/Acrylamid-Copolymer der BASF Construction Solutions GmbH) sollte das im anorganischen Schaum während der Verarbeitungszeit und Trocknungszeit abgespaltete Wasser gebunden werden um dem Verflüssigungseffekt entgegenzuwirken und so das Fließen des Schaumes von vertikalen Oberflächen zu verhindern. Dazu wurde eine Dosierreihe durchgeführt (Angaben in Gew.-%). An Hand des Ausbreitmaßes und der Porenstruktur des Prüfkörpers wird der Einfluss des Additives bewertet. Das Ausbreitmaß wurde in Anlehnung an DIN EN 1015-3 bestimmt. Diese Ergebnisse sind in der Tabelle 7 wiedergegeben. Die Porenstrukturen der ausgehärteten Proben sind in Fig. 2 (a-f) wiedergegeben.

**Tabelle 7**

| Starvis® 308 F | Ausbreitmaß [mm] nach | | | Fließdifferenz [mm] | Porenstruktur |
|---|---|---|---|---|---|
| | 4 min | 10 min | 15 min | (4 bis 15 min) | |
| 0,00 % | 147,33 | 157,78 | 164,88 | 17,55 | Fig. 2a |
| 0,05 % | 149,28 | 154,25 | 157,73 | 8,45 | Fig. 2b |
| 0,10 % | 146,28 | 150,40 | 152,00 | 5,72 | Fig. 2c |
| 0,20 % | 139,90 | 146,98 | 150,73 | 10,83 | Fig. 2d |
| 0,50 % | 145,43 | 163,73 | 171,83 | 26,40 | Fig. 2e |
| 1,00 % | 141,18 | 162,85 | 170,75 | 29,57 | Fig. 2f |

Dieses Beispiel zeigt, dass das Fließverhalten des Geopolymerschaums mit Hilfe des Wasserretentionsmittels Starvis® 308 F stabilisiert werden konnte. Zugaben von 0,05% bis 0,20% wirkten am besten. Höhere Konzentrationen wirkten sich bereits wieder negativ aus. Der Zusatz des Wasserretentionsmittels hatte im gesamten untersuchten Bereich keinerlei negative Auswirkung auf die Porenstruktur (siehe Fig. 2). Weitere Untersuchungen ergaben, dass auch die Endfestigkeiten nicht negativ beeinflusst wurden.

### Beispiel 6: Großtechnische Schäumung

### a) Oszillierende Schäumung:

Für die oszillierende Schäumung wurde eine Anlage der Firma beba Mischtechnik GmbH, Essen verwendet. Der Aufschäumungsprozess fand in einem Mischkopf aus zylinderförmig ausgebildeten Kammern statt, die einen kreisförmigen Querschnitt aufwiesen und miteinander verbunden waren. Jede Kammer besaß zwei austauschbare Mischelemente, die vorzugsweise mit passenden Lochblechen ausgestattet waren. Die Mischkopfeinheit hatte ein Volumen von 7,2 l und wurde von einer oder mehreren Pumpen mit den jeweiligen Aufschlämmungen der Ausgangsstoffe bzw. Additiven sowie mit Druckluft gespeist und bei einer Oszillationsfrequenz von 50 bis 70 Hz betrieben. Das Verfahren und die Vorrichtung sind in EP 1716915 B1 genauer beschrieben. Mit dieser Anlage konnten Aufschlämmungen mit Dichten von 1100 bis 1700 g/l zu Schäumen mit Rohdichten von 100 bis 500 g/l aufgeschäumt werden. Der Durchsatz betrug ca. 150 l/h.

### b) Rotor/Stator-Schäumung:

Die Schäumung wurde mit einer Rotor/Stator-Vorrichtung durchgeführt. Als geeignet haben sich Mischer des Typs Sicomix oder Mügromix+ der Firma Heitec-Auerbach GmbH & Co.KG, Ellefeld erwiesen. Das Hauptelement der Mischer war ein Low Shear-Mischkopf, der nach dem Rotor/Stator-Prinzip arbeitete. Die Mischkopfdrehzahl betrug 50 bis 300 U/min. Die Dichten der Aufschlämmungen betrugen 1100 bis 1700, die Rohdichten der Schäume 100 bis 500 g/l. Der Durchsatz betrug ca. 120 l/h.

Da manche Additive im hochalkalischen Bereich nicht ausreichend stabil waren, wurden sie erst nach der eigentlichen Schäumung zugesetzt. Dies erfolgte über eine zweite Pumpe sowie einen statischen Mischer in die Ausgangsleitung der oszillierenden Schäumung bzw. Rotor/Stator-Schäumung.

## Patentansprüche

1. Geopolymerschaum-Formulierung, umfassend:
mindestens ein anorganisches Bindemittel, welches Hochofenschlacke und zusätzlich Microsilica und/oder Metakaolin umfasst;
mindestens einen alkalischen Aktivator, ausgewählt aus der Gruppe, bestehend aus Alkalimetallhydroxiden, Alkalimetallcarbonaten, Alkalimetallaluminaten, Alkalimetallsilikaten sowie Mischungen davon;
mindestens ein Alkylpolyglucosid;
eine Gasphase und
Wasser.

2. Formulierung nach Anspruch 1, **dadurch gekennzeichnet, dass** der alkalische Aktivator aus Alkalimetallhydroxiden der Formel MOH und Alkalimetallsilikaten der Formel m SiO₂ · n M₂O ausgewählt ist, wobei M das Alkalimetall ist, vorzugsweise Li, Na, K sowie Mischungen davon, und das Molverhältnis m:n ≤ 4.0, vorzugsweise ≤ 3.0, weiter bevorzugt ≤ 2.0, insbesondere ≤ 1.70, und ganz besonders bevorzugt ≤ 1.20 ist, und wobei der alkalische Aktivator vorzugsweise eine Mischung aus Alkalimetallhydroxiden und Alkalimetallsilikaten umfasst.

3. Formulierung nach Anspruch 1 oder 2, **dadurch gekennzeichnet, dass** sie
3 - 60 Gew.-%, vorzugsweise 5 - 50 Gew.-% Hochofenschlacke,
3 - 70 Gew.-%, vorzugsweise 5 - 50 Gew.-% Microsilica und/oder Metakaolin,
0 - 50 Gew.-% Flugasche,
1 - 55 Gew.-% alkalischen Aktivator (gerechnet als Feststoffgehalt),
10 - 60 Gew.-% Wasser (Gesamtmenge)
sowie Tensid und Gasphase umfasst.

4. Formulierung nach einem der Ansprüche 1 bis 3, **dadurch gekennzeichnet, dass** das Alkylpolyglucosid die Formel H-(C₆H₁₀O₅)ₘ-O-R¹ aufweist, wobei (C₆H₁₀O₅) für eine Glucose-Einheit und R¹ für eine C₈₋₁₂-Alkylgruppe steht, und m = 1 bis 5 ist.

5. Formulierung nach einem der Ansprüche 1 bis 4, **dadurch gekennzeichnet, dass** die Gasphase aus der Gruppe, bestehend aus Luft, Stickstoff, Edelgas, Kohlenwasserstoffen sowie Mischungen davon, ausgewählt ist, welche 20 bis 90, vorzugsweise 50 bis 80 Volumenprozent ausmacht.

6. Formulierung nach einem der Ansprüche 1 bis 5, **dadurch gekennzeichnet, dass** sie 10 bis 60 Gew.-% Wasser umfasst.

7. Formulierung nach einem der Ansprüche 1 bis 6, **dadurch gekennzeichnet, dass** sie zusätzlich höchstens 20 Gew.-%, vorzugsweise höchstens 10 Gew.-% und insbesondere höchstens 5 Gew.-% eines Zements, insbesondere Portlandzement, Calciumaluminat-Zement sowie Mischungen davon, umfasst.

8. Formulierung nach einem der Ansprüche 1 bis 7, **dadurch gekennzeichnet, dass** sie zusätzlich mindestens ein Additiv zur Schaumstabilisierung, Schrumpfminderung, Flexibilisierung, Hydrophobierung, Dispergierung, Fasern und Füllstoffe sowie Mischungen davon, umfasst.

9. Formulierung nach Anspruch 8, **dadurch gekennzeichnet, dass** das Additiv zur Schaumstabilisierung aus der Gruppe, bestehend aus pyrogener Kieselsäure, Eiweißen, Rheologie-modifizierenden Mitteln, wie z.B. Stärken, modifizierten Stärken, Sulfo- und/oder quaternisierte Ammoniumgruppen tragenden Poly(meth)acrylaten und -(meth)acrylamiden, sowie Mischungen davon, ausgewählt ist.

10. Formulierung nach Anspruch 8, **dadurch gekennzeichnet, dass** das Additiv zur Schrumpfminderung aus der Gruppe, bestehend aus Aminen, Alkanolaminen, Betain(en), Glykolen, Polyolen, Alumosilikathohlkugeln, Glashohlkugeln, Blähglas sowie Mischungen davon, ausgewählt ist.

11. Formulierung nach Anspruch 8, **dadurch gekennzeichnet, dass** das Additiv zur Flexibilisierung aus der Gruppe, bestehend aus redispergierbaren Polymerpulvern, Polyisocyanaten, Polyisocyanat-Präpolymeren, Epoxidharzen, Epoxidverbindungen sowie Mischungen davon, ausgewählt ist.

12. Formulierung nach Anspruch 8, **dadurch gekennzeichnet, dass** das Additiv zur Hydrophobierung aus der Gruppe, bestehend aus Triglyceriden, Paraffinen, Polysiloxanen, Hydrogensilanen, Alkoxysilanen, Natriummethylsilikonat, sowie Mischungen davon, ausgewählt ist.

13. Formulierung nach Anspruch 8, **dadurch gekennzeichnet, dass** das Additiv zur Dispergierung aus der Gruppe, bestehend aus Kammpolymeren, wie Polycarboxylatethern, kammförmigen polyaromatischen Ethern, kammförmigen kationischen Copolymeren sowie Mischungen davon, ausgewählt ist.

14. Formulierung nach Anspruch 8, **dadurch gekennzeichnet, dass** die Fasern aus der Gruppe, bestehend aus Steinfasern, Glasfasern, Kohlefasern, ggf. modifizierten organischen Fasern, Zellulosefasern, Lignozellulosefasern, Metallfasern sowie Mischungen davon, ausgewählt sind.

15. Formulierung nach Anspruch 8, **dadurch gekennzeichnet, dass** die Füllstoffe aus der Gruppe, bestehend aus Quarzsand, Calciumcarbonat, Gesteinsmehlen, Leichtfüllstoffen, Pigmenten, Schwerfüllstoffen, Metallsalzen sowie Mischungen davon ausgewählt sind.

16. Formulierung nach einem der Ansprüche 1 bis 15, **dadurch gekennzeichnet, dass** alle Bestandteile entweder gemeinsam als eine Komponente vorliegen oder dass feste Bestandteile in einer ersten, festen Komponente und das Wasser in einer zweiten, flüssigen Komponente vorgehalten werden.

17. Verfahren zur Herstellung der Formulierung nach einem der vorausgehenden Ansprüche, **dadurch gekennzeichnet, dass** die Schäumung durch mechanischen Eintrag von Luft durchgeführt wird, vorzugsweisemit Hilfe eines Stator-Rotor-Verfahrens, eines oszillierenden Verfahrens oder mittels mechanischen Rührens.

18. Verwendung der Geopolymerschaum-Formulierung nach einem der Ansprüche 1 bis 16 zur Herstellung eines nicht brennbaren, schallabsorbierenden, wärmedämmenden Geopolymerschaumelements.

19. Nicht brennbares, schallabsorbierendes, wärmedämmendes Geopolymerschaumelement erhältlich aus der Geopolymerschaum-Formulierung nach einem der Ansprüche 1 bis 16.

## Claims

1. Geopolymer foam formulation comprising:
at least one inorganic binder which comprises blast furnace slag, and also comprises microsilica and/or metakaolin;
at least one alkaline activator selected from the group consisting of alkali metal hydroxides, alkali metal carbonates, alkali metal aluminates, alkali metal silicates and mixtures thereof;
at least one alkyl polyglucoside;
a gas phase and
water.

2. Formulation according to Claim 1, **characterized in that** the alkaline activator is selected from alkali metal hydroxides of the formula MOH and alkali metal silicates of the formula m SiO₂ · n M₂O, where M is the alkali metal, preferably Li, Na, or K or a mixture thereof, and the molar ratio m:n is ≤ 4.0, preferably ≤ 3.0, with further preference ≤ 2.0, in particular ≤ 1.70, and with very particular preference ≤ 1.20, and where the alkaline activator preferably comprises a mixture of alkali metal hydroxides and of alkali metal silicates.

3. Formulation according to Claim 1 or 2, **characterized in that** it comprises
from 3 to 60% by weight, preferably from 5 to 50% by weight, of blast furnace slag,
from 3 to 70% by weight, preferably from 5 to 50% by weight, of microsilica and/or metakaolin,
from 0 to 50% by weight of flyash,
from 1 to 55% by weight of alkaline activator (calculated as solids content),
from 10 to 60% by weight of water (total quantity), and also surfactant and gas phase.

4. Formulation according to any of Claims 1 to 3, **characterized in that** the alkyl polyglucoside has the formula H-(C₆H₁₀O₅)ₘ-O-R¹, where (C₆H₁₀O₅) is a glucose unit and R¹ is a C₈₋₁₂-alkyl group, and m = from 1 to 5.

5. Formulation according to any of Claims 1 to 4, **characterized in that** the gas phase is selected from the group consisting of air, nitrogen, noble gas, hydrocarbons and mixtures thereof, which makes up from 20 to 90 percent by volume, preferably from 50 to 80 percent by volume.

6. Formulation according to any of Claims 1 to 5, **characterized in that** it comprises from 10 to 60% by weight of water.

7. Formulation according to any of Claims 1 to 6, **characterized in that** it also comprises at most 20% by weight, preferably at most 10% by weight and in particular at most 5% by weight of a cement, in particular Portland cement, calcium aluminate cement or a mixture thereof.

8. Formulation according to any of Claims 1 to 7, **characterized in that** it also comprises at least one additive for foam stabilization, shrinkage reduction, flexibilization, hydrophobization, or dispersion, fibres and fillers or a mixture thereof.

9. Formulation according to Claim 8, **characterized in that** the additive for foam stabilization is selected from the group consisting of fumed silica, proteins, rheology-modifying agents, e.g. starches, modified starches, poly(meth)acrylates and -(meth)acrylamides bearing sulpho and/or quaternized ammonium groups and mixtures thereof.

10. Formulation according to Claim 8, **characterized in that** the additive for shrinkage reduction is selected from the group consisting of amines, alkanolamines, betaine(s), glycols, polyols, hollow aluminosilicate beads, hollow glass beads, foamed glass and mixtures thereof.

11. Formulation according to Claim 8, **characterized in that** the additive for flexibilization is selected from the group consisting of redispersible polymer powders, polyisocyanates, polyisocyanate prepolymers, epoxy resins, epoxy compounds and mixtures thereof.

12. Formulation according to Claim 8, **characterized in that** the additive for hydrophobization is selected from the group consisting of triglycerides, paraffins, polysiloxanes, hydrosilanes, alkoxysilanes, sodium methylsiliconate and mixtures thereof.

13. Formulation according to Claim 8, **characterized in that** the additive for dispersion is selected from the group consisting of comb polymers such as polycarboxylate ethers, comb-shaped polyaromatic ethers, comb-shaped cationic copolymers and mixtures thereof.

14. Formulation according to Claim 8, **characterized in that** the fibres are selected from the group consisting of rock fibres, glass fibres, carbon fibres, optionally modified organic fibres, cellulose fibres, lignocellulose fibres, metal fibres and mixtures thereof.

15. Formulation according to Claim 8, **characterized in that** the fillers are selected from the group consisting of quartz sand, calcium carbonate, rock flour, low-density fillers, pigments, high-density fillers, metal salts and mixtures thereof.

16. Formulation according to any of Claims 1 to 15, **characterized in that** either all of the constituents are present together as a single component or that solid constituents are held in a first, solid component and the water is held in a second, liquid component.

17. Process for the production of the formulation according to any of the preceding claims, **characterized in that** the foaming is carried out via mechanical introduction of air, preferably with the aid of a stator-rotor process, or of an oscillating process or by means of mechanical agitation.

18. Use of the geopolymer foam formulation according to any of Claims 1 to 16 for the production of an incombustible, sound-absorbing, thermally insulating geopolymer foam element.

19. Incombustible, sound-absorbing, thermally insulating geopolymer foam element which can be obtained from the geopolymer foam formulation according to any of Claims 1 to 16.

## Revendications

1. Composition de mousse de géopolymère, comprenant :
au moins un liant inorganique, qui comprend du laitier de haut-fourneau et en plus de la microsilice et/ou du métakaolin ;
au moins un activateur alcalin, choisi dans le groupe constitué par les hydroxydes de métaux alcalins, les carbonates de métaux alcalins, les aluminates de métaux alcalins, les silicates de métaux alcalins ainsi que des mélanges de ceux-ci ;
au moins un alkylpolyglucoside ;
une phase gazeuse et
de l'eau.

2. Composition selon la revendication 1, **caractérisée en ce que** l'activateur alcalin est choisi parmi les hydroxydes de métaux alcalins de formule MOH et les silicates de métaux alcalins de formule m SiO₂ . n M₂O, dans laquelle M est le métal alcalin, de préférence Li, Na, K ainsi que des mélanges de ceux-ci, et le rapport molaire m:n est ≤ 4,0, de préférence ≤ 3,0, encore mieux ≤ 2,0, en particulier ≤ 1,70, et de façon tout particulièrement préférée ≤ 1,20, et dans laquelle l'activateur alcalin comprend de préférence un mélange d'hydroxydes de métaux alcalins et de silicates de métaux alcalins.

3. Composition selon la revendication 1 ou 2, **caractérisée en ce qu'**elle comprend
3 - 60 % en poids, de préférence 5 - 50 % en poids de laitier de haut-fourneau,
3 - 70 % en poids, de préférence 5 - 50 % en poids de microsilice et/ou métakaolin,
0 - 50 % en poids de cendres volantes,
1 - 55 % en poids d'activateur alcalin (calculé en tant que teneur en matières solides),
10 - 60 % en poids d'eau (quantité totale),
ainsi qu'un tensioactif et une phase gazeuse.

4. Composition selon l'une quelconque des revendications 1 à 3, **caractérisée en ce que** l'alkyl-glucoside présente la formule H-(C₆H₁₀O₅)ₘ-O-R¹, dans laquelle (C₆H₁₀O₅) représente une unité glucose et R¹ représente un groupe alkyle en C₈-C₁₂, et m vaut de 1 à 5.

5. Composition selon l'une quelconque des revendications 1 à 4, **caractérisée en ce que** la phase gazeuse est choisie dans le groupe constitué par l'air, l'azote, un gaz rare, des hydrocarbures ainsi que des mélanges de ceux-ci, qui représente 20 à 90, de préférence 50 à 80 pour cent en volume.

6. Composition selon l'une quelconque des revendications 1 à 5, **caractérisée en ce qu'**elle comprend 10 à 60 % en poids d'eau.

7. Composition selon l'une quelconque des revendications 1 à 6, **caractérisée en ce qu'**elle comprend en outre au maximum 20 % en poids, de préférence au maximum 10 % en poids et en particulier au maximum 5 % en poids d'un ciment, en particulier ciment Portland, ciment d'aluminate de calcium ainsi que des mélanges de ceux-ci.

8. Composition selon l'une quelconque des revendications 1 à 7, **caractérisée en ce qu'**elle comprend en outre au moins un additif pour la stabilisation de la mousse, la diminution du retrait, la flexibilisation, l'hydrophobisation, la dispersion, des fibres et des charges ainsi que des mélanges de ceux-ci.

9. Composition selon la revendication 8, **caractérisée en ce que** l'additif pour la stabilisation de la mousse est choisi dans le groupe constitué par la silice pyrogénée, des protéines, les agents modificateurs de rhéologie, comme par exemple les amidons, les amidons modifiés, les poly(méth)acrylates et poly(méth)acrylamides portant des groupes sulfo et/ou ammonium quaternisé, ainsi que des mélanges de ceux-ci.

10. Composition selon la revendication 8 **caractérisée en ce que** l'additif pour la réduction du retrait est choisi dans le groupe constitué par les amines, les alcanolamines, la/les bétaïne(s), les glycols, les polyols, les billes creuses d'aluminosilicate, les billes creuses de verre, le verre soufflé ainsi que des mélanges de ceux-ci.

11. Composition selon la revendication 8, **caractérisée en ce que** l'additif pour la flexibilisation est choisi dans le groupe constitué par les poudres de polymère redispersables, les polyisocyanates, les prépolymères polyisocyanate, les résines époxy, les composés époxy ainsi que des mélanges de ceux-ci.

12. Composition selon la revendication 8, **caractérisée en ce que** l'additif pour l'hydrophobisation est choisi dans le groupe constitué par les triglycérides, les paraffines, les polysiloxanes, les hydrogénosilanes, les alcoxysilanes, le méthylsiliconate de sodium, ainsi que des mélanges de ceux-ci.

13. Composition selon la revendication 8, **caractérisée en ce que** l'additif pour la dispersion est choisi dans le groupe constitué par les polymères en peigne, tels que les éthers de polycarboxylate, les éthers polyaromatiques en forme de peigne, les copolymères cationiques en forme de peigne ainsi que des mélanges de ceux-ci.

14. Composition selon la revendication 8, **caractérisée en ce que** les fibres sont choisies dans le groupe constitué par les fibres de roche, les fibres de verre, les fibres de carbone, des fibres organiques éventuellement modifiées, les fibres de cellulose, les fibres de lignocellulose, les fibres métalliques ainsi que des mélanges de ceux-ci.

15. Composition selon la revendication 8, **caractérisée en ce que** les charges sont choisies dans le groupe constitué par le sable quartzeux, le carbonate de calcium, les poudres de roche, les charges légères, les pigments, les charges lourdes, les sels métalliques ainsi que des mélanges de ceux-ci.

16. Composition selon l'une quelconque des revendications 1 à 15, **caractérisée en ce que** soit tous les constituants sont présents ensemble sous forme d'un composant, soit les constituants solides se trouvent dans un premier composant solide et l'eau se trouve dans un second composant liquide.

17. Procédé pour la préparation de la composition selon l'une quelconque des revendications précédentes, **caractérisé en ce qu'**on effectue le moussage par incorporation mécanique d'air, de préférence à l'aide d'un procédé stator-rotor, d'un procédé oscillant ou au moyen d'agitation mécanique.

18. Utilisation de la composition de mousse de géopolymère selon l'une quelconque des revendications 1 à 16, pour la fabrication d'un élément en mousse de géopolymère isolant thermique, absorbant phonique, non combustible.

19. Élément en mousse de géopolymère isolant thermique, absorbant phonique, non combustible, pouvant être obtenu à partir de la composition de mousse de géopolymère selon l'une quelconque des revendications 1 à 16.
